# EUROPEAN PATENT APPLICATION

(11) **EP 2 146 265 A1**
(43) Date of publication of application: **20.01.2010**
(21) Application number: 08160627.9
(22) Date of filing: 17.07.2008
(51) Int. Cl.: G06F 1/16

(54) **A display with a thin sheet battery**

(71) Applicant: Sunyen Co., Ltd., Hsinchu County 302 (TW)
(72) Inventor: Tu, Yu-Ta, Jhubei City, Hsinchu County 302 (TW)
(74) Representative: Chaillot, Geneviève

(57) **Abstract**

A display with a thin sheet battery comprises a frame, a display panel installed in the frame; a thin sheet battery adhered on a backside of the panel; wherein power from the thin sheet battery serves to supply to the display panel and a device connected to the display panel. Other than providing an independent power supply, the thin sheet cell can supply power to other electronic elements connected to the display, such as the mainframe of a notebook computer. Thereby the space originally in the mainframe for receiving a battery is used to contain other objects or the size of the notebook computer can be reduced.

## Description

### Field of the invention

The present invention relates to displays, and in particular to a display with a thin sheet battery.

### Background of the invention

The liquid crystal display (LCD) has become a main trend in consume electronic devices because of the compact size and low power consumption thereof. Almost all the conventional cathode ray tube displays are replaced by LCDs.

In general, in manufacturing LCDs, liquid crystals are filled into two glass plates having glass electrodes. Outsides of the plates are adhered with light polarized plates (or light polarized films) so as to form LCD cells. Then they are installed with driving circuits, control circuits, and backside elements so as to form a liquid crystal module. Then a frame is added to the liquid crystal module to form an LCD.

Conventional LCDs need to be connected to an external power source or has power from the electronic device connected therewith. However the external power supply is not advantageous as the LCDs are carried outdoors. Furthermore, if the LCDs are installed to notebook computers, although it has the power from the notebook computer, the battery of the notebook computer occupies a great space to enlarge the size of the notebook computer and also to affect the heat dissipation of the notebook computer. Thus, notebook computers can wholly replace desktop computers.

### Summary of the Invention

Accordingly, the primary object of the present invention is to a display with a thin sheet battery, wherein other than providing an independent power supply, the thin sheet cell can supply power to other electronic elements connected to the display, such as the mainframe of a notebook computer. Thereby the space originally in the mainframe for receiving a battery is used to contain other objects or the size of the notebook computer can be reduced.

To achieve above object, the present invention provides a display with a thin sheet battery which comprises a frame, a display panel installed in the frame; a thin sheet battery adhered on a backside of the panel; wherein power from the thin sheet battery serves to supply to the display panel and a device connected to the display panel.

The various objects and advantages of the present invention will be more readily understood from the following detailed description when read in conjunction with the appended drawing.

### Brief Description of the Drawings

Fig. 1 is a partial exploded perspective view of the present invention.
Fig. 2 is a schematic view about the first embodiment of the present invention.
Fig. 3 is a schematic view about the second embodiment of the present invention.
Fig. 4 is a schematic view about the third embodiment of the present invention.

### Detailed Description of the Invention

In order that those skilled in the art can further understand the present invention, a description will be described in the following in details. However, these descriptions and the appended drawings are only used to cause those skilled in the art to understand the objects, features, and characteristics of the present invention, but not to be used to confine the scope and spirit of the present invention defined in the appended claims.

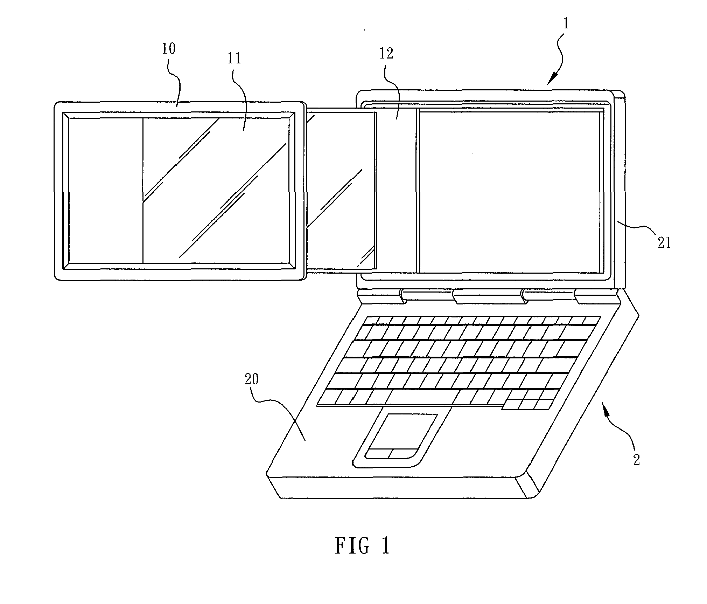

Referring to Fig. 1, the embodiment about a notebook 2 with a display 1 according to the present invention is illustrated. The display with thin sheet cells according to the present invention has the following elements.

A frame 10 is included.

A display panel 11 is installed in the frame 10

A thin sheet battery 12 is adhered on a backside of the panel 11. When the frame 10 is assembled to the display portion of a notebook 2, the thin sheet battery 12 will be fixed. Then the power from the thin sheet battery 12 will output to supply to the display panel 11 and the mainframe 20 of the notebook computer.

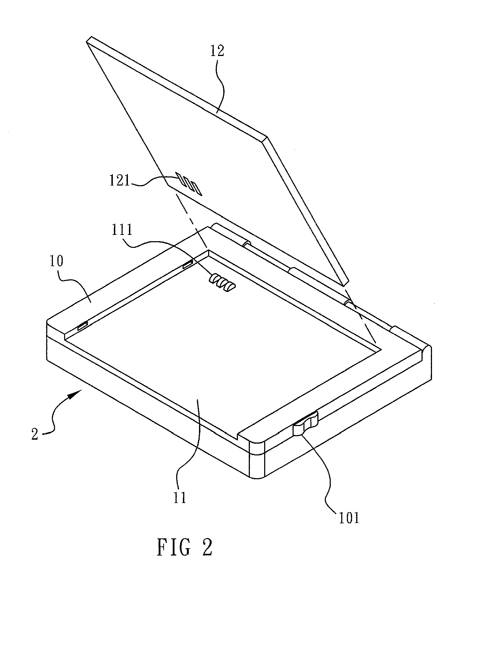

Referring to Fig. 2, a plurality of metal conductive sheets 121 are installed on the thin sheet battery 12.

A plurality of contact elastic sheets 111 are installed on the display panel 11 at positions corresponding to the metal conductive sheets 121. As the metal conductive sheets 121 are in contact with the contact elastic sheets 111, power will be transferred from the thin sheet battery 12 to the display panel 11.

The power to the mainframe 20 of the computer from the thin sheet battery 12 can be completed by using a soft printed circuit board or a bus with a bank of wires (not shown). Thereby the mainframe 20 has power from the thin sheet battery 12.

The following ways provide the method to fix the thin sheet battery 12 to the display panel 11.

In the first embodiment of the present invention, as illustrated in Fig. 2, at least one stud 101 is fixed on one side of the frame 10. Then a stud 101 is used to fix the thin sheet battery 12 at the backside of the display panel 11.

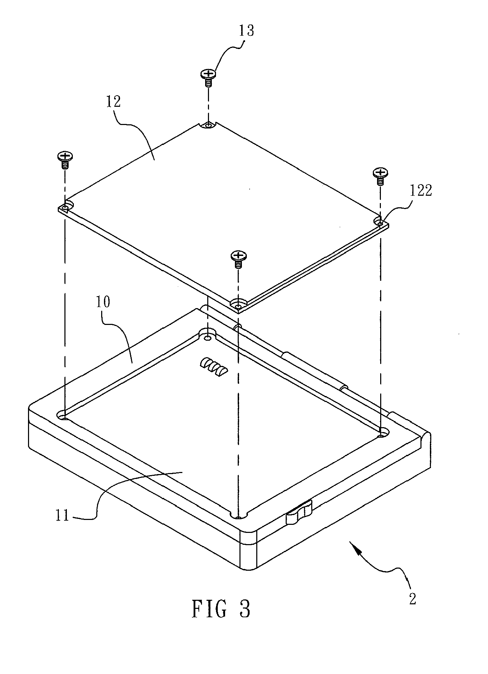

In the second embodiment of the present invention, as shown in Fig. 3, a plurality of positioning holes 122 are formed on the predetermined positions of the thin sheet battery 12. Then the thin sheet battery 12 is fixed to the backside of the display panel 11 or the frame 10 by using screws to pass through the positioning holes 122.

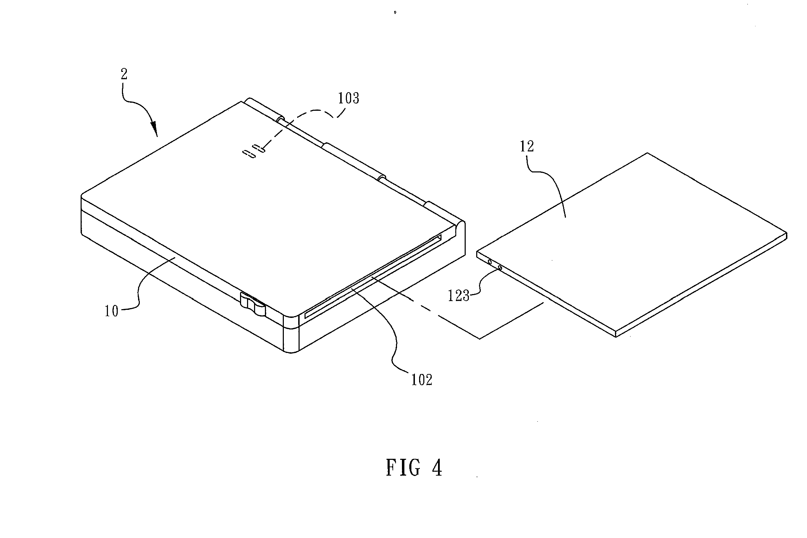

In the third embodiment, as shown in Fig. 4, a space for installing the thin sheet battery 12 is left on the frame 10 of the display panel 11. The frame 10 has a slot 102 with an opening at one side. The size of the slot 102 is slightly larger than that of the thin sheet battery 12. Then the thin sheet battery 12 is inserted into the slot 102. The frame 10 may be installed with a conductive element 103 for electrically connecting the display panel 11. Furthermore, the thin sheet battery 12 is formed with conductive hole 123 at a position corresponding to the conductive element 103. Thereby after the thin sheet battery 12 is inserted into the frame 10, the conductive element 103 is in contact with the conductive hole 123. Thus power of the thin sheet battery 12 is supplied to the display panel 11.

Other than providing an independent power supply, the thin sheet battery 12 can supply power to other electronic elements connected to the display, such as the mainframe of a notebook computer. Thereby the space originally in the mainframe for receiving a battery is used to contain other objects or the size of the notebook computer can be reduced.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A display with a thin sheet battery comprising:
a frame,
a display panel installed in the frame;
a thin sheet battery adhered on a backside of the panel; wherein power from the thin sheet battery serves to supply to the display panel and a device connected to the display panel.

2. The display with a thin sheet battery as claimed in claim 1, wherein a plurality of metal conductive sheets are installed on the thin sheet battery; and a plurality of contact elastic sheets are installed on the display panel at positions corresponding to the metal conductive sheets; as the metal conductive sheets are in contact with the contact elastic sheets, power will be transferred from the thin sheet battery to the display panel.

3. The display with a thin sheet battery as claimed in claim 1, wherein at least one stud is fixed on side of the frame; then stud fixes the thin sheet battery at the backside of the display panel.

4. The display with a thin sheet battery as claimed in claim 1, wherein a plurality of positioning holes are formed on the predetermined positions of the thin sheet battery; and then the thin sheet battery is fixed to the backside of the display panel or the frame by using screws to pass through the positioning holes.

5. The display with a thin sheet battery as claimed in claim 1, wherein a space for installing the thin sheet battery is left on the frame of the display panel; the frame has a slot with an opening at one side; the size of the slot is slightly larger than that of the thin sheet battery; the thin sheet battery is inserted into the slot.

6. The display with a thin sheet battery as claimed in claim 5, wherein the frame is installed with a conductive element for electrically connecting the display panel; the thin sheet battery is formed with conductive hole at a position corresponding to the conductive element; when the thin sheet battery is inserted into the frame, the conductive element is in contact with the conductive hole; thus power of the thin sheet battery is supplied to the display panel.

7. A display with a thin sheet battery comprising:
a frame,
a display panel installed in the frame;
a thin sheet battery adhered on a backside of the panel; the frame being fixed to a display portion of a notebook computer; wherein power from the thin sheet battery serves to supply to the display panel and devices connected to the display panel.
